(19) Europäisches Patentamt
European Patent Office
Office européen des brevets

(11) EP 4 571 888 A1

(12) **EUROPEAN PATENT APPLICATION**
published in accordance with Art. 153(4) EPC

(43) Date of publication:
**18.06.2025 Bulletin 2025/25**

(21) Application number: **22966686.2**

(22) Date of filing: **28.11.2022**

(51) International Patent Classification (IPC):
***H01M 4/62*** *(2006.01)*

(52) Cooperative Patent Classification (CPC):
**H01M 4/622; H01M 4/62**

(86) International application number:
**PCT/CN2022/134632**

(87) International publication number:
**WO 2024/113081 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **DAI, Zhipeng**
  **Ningde, Fujian 352100 (CN)**
- **REN, Miaomiao**
  **Ningde, Fujian 352100 (CN)**
- **JIN, Chao**
  **Ningde, Fujian 352100 (CN)**
- **WU, Zirui**
  **Ningde, Fujian 352100 (CN)**
- **YAN, Guanfusheng**
  **Ningde, Fujian 352100 (CN)**

(74) Representative: **Kraus & Lederer PartGmbB**
**Thomas-Wimmer-Ring 15**
**80539 München (DE)**

(54) **BINDER, ELECTRODE SHEET, SECONDARY BATTERY, AND ELECTRICAL APPARATUS**

(57) This application relates to a binder, an electrode plate, a secondary battery, and an electric apparatus. A modified polyacrylic acid polymer material has the following structural features. The foregoing modified polyacrylic acid polymer material employs polymerization of four monomers: an acrylic acid, an alkaline metal salt of acrylic acid, a polyethylene glycol acrylate monoester, and acrylonitrile, and is capable of acting as a binder, fully coating the active material in the process of mixing with the active material, lowering the rebound of the electrode plate under extreme design conditions, reducing the cell expansion force during cycling, and increasing the cell life.

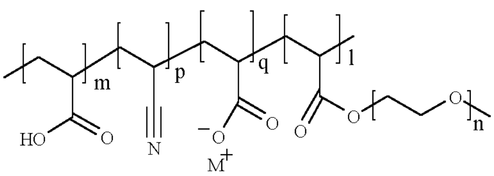

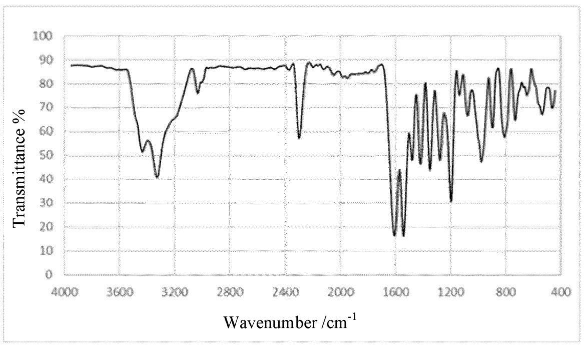


FIG. 7

EP 4 571 888 A1

## Description

## TECHNICAL FIELD

This application relates to the field of lithium battery technologies, and in particular, to a binder, an electrode plate, a secondary battery, and an electric apparatus.

## BACKGROUND

In recent years, with increasingly wide use of lithium-ion batteries, lithium-ion batteries have been widely used in energy storage power supply systems such as hydroelectric, thermal, wind, and solar power plants, and many other fields including electric tools, electric bicycles, electric motorcycles, electric vehicles, military equipment, and aerospace.

Along with the great development of lithium-ion batteries, higher requirements are imposed on their energy density, cycling performance, safety performance, and the like. Consequently, this has led to an increasing number of technical challenges. For example, the energy density of the lithium-ion battery cell is becoming increasingly high. In cell design, the electrode plate is required to have a high coating surface density and a high compacted density, and in addition, materials such as silicon have been gradually introduced in the selection of active materials. All these measures lead to the accumulation of the rebound amount of the electrode plate in the Z-direction. In short term, this affects the amount of the active material in service in the electrode plate, and in long term, the excessive swelling force of the cell caused by the rebound of the electrode plate affects the service life.

This application has been made in view of the foregoing issue, and the purpose thereof is to provide a modified polyacrylic acid polymer material capable of being used as a binder in lithium-ion batteries to alleviate problems related to easy swelling during cell cycling and low battery life.

In order to achieve the above purpose, a first aspect of this application provides a modified polyacrylic acid polymer material having the following structural features:

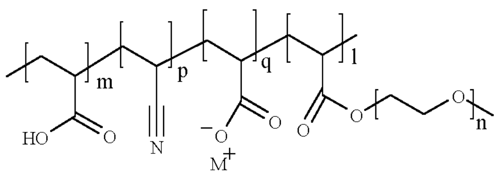

where m=2,500-20,000, p=50-200, q=1,000-15,000, and l=1,000-15,000; and
n=500-5,000, and M is selected from alkaline metal ions.

A second aspect of this application provides a preparation method of modified polyacrylic acid polymer material, including the following step:
carrying out a polymerization reaction of an alkaline metal salt of acrylic acid, a polyethylene glycol acrylate monoester, an acrylic acid, and acrylonitrile.

A third aspect of this application provides a binder including one or more of the modified polyacrylic acid polymer material according to the first aspect and a modified polyacrylic acid polymer material prepared by the preparation method according to the second aspect.

A fourth aspect of this application provides an electrode plate including a current collector and an active material layer disposed on at least one surface of the current collector, where a material of the active material layer includes an active material and the binder according to the third aspect.

A fifth aspect of this application provides a secondary battery including the electrode plate according to the fourth aspect.

A sixth aspect of this application provides an electric apparatus including at least one selected from the secondary batteries according to the fifth aspect.

## BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;

FIG. 5 is an exploded view of the battery pack according to the embodiment of this application in FIG. 4;
FIG. 6 is a schematic diagram of an electric apparatus using a secondary battery as a power source according to an embodiment of this application; and
FIG. 7 is an infrared spectrum of a modified polyacrylic acid polymer material (binder) prepared in an example of this application.

Description of reference signs:
1. battery pack; 2. upper box body; 3. lower box body; 4. battery module; 5. secondary battery; 51. housing; 52. electrode assembly; 53. cover plate; and 6. electric apparatus.

## DESCRIPTION OF EMBODIMENTS

The following specifically discloses embodiments of a binder, an electrode plate, a secondary battery, and an electric apparatus of this application with appropriate reference to detailed descriptions of the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.
"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.
Unless otherwise specified, all the embodiments and optional embodiments of this application can be combined with each other to form new technical solutions.
Unless otherwise specified, all the technical features and optional technical features of this application can be combined with each other to form new technical solutions.
Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.
Unless otherwise specified, "include" and "contain" mentioned in this application are inclusive or may be exclusive. For example, the terms "include" and "contain" can mean that other unlisted components may also be included or contained, or only listed components are included or contained.
Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).
Room temperature in this application generally refers to 4-30°C, and preferably 20±5°C.
At present, a large number of organic polymers are used as binders in lithium-ion batteries but cannot meet the requirements in terms of electrical conductivity, adhesion, and electrode-plate flexibility, necessitating research into polymer modification. Polyacrylic acid polymers are widely used in lithium-ion batteries due to their high adhesion and chemical stability as monomers. Although the overall performance of polyacrylic acid polymers is superior to that of other similar aqueous binders of the same type, batteries prepared using conventional polyacrylic acid polymers as binders still have the problem of excessive cell swelling force affecting their service life.
An example of this application provides a modified polyacrylic acid polymer material having the following structural features:

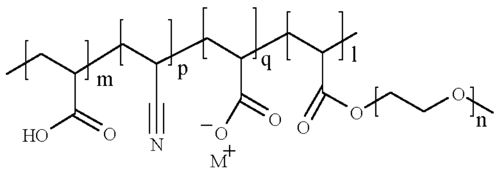

where m=2,500-20,000, p=50-200, q=1,000-15,000, and l=1,000-15,000; and n=500-5,000, and M is selected from alkaline metal ions.

The foregoing modified polyacrylic acid polymer material employs polymerization of four monomers: an acrylic acid, an alkaline metal salt of acrylic acid, a polyethylene glycol acrylate monomer, and acrylonitrile, and is capable of acting as a binder, fully coating the active material in the process of mixing with the active material, lowering the rebound of the electrode plate under extreme design conditions, reducing the cell swelling force during cycling, and increasing the cell life.

In addition, the foregoing modified polyacrylic acid polymer material also has the following advantages:

(1) During the use of the conventional polyacrylic acid polymers, polymer chains agglomerate with each other due to hydrogen bonding on the long-chain molecules, making the binder in the slurry difficult to effectively disperse, ultimately leading to an increase in the resistance of the electrode plate and a deterioration in the kinetic performance of the cell. The foregoing modified polyacrylic acid polymer material of this application can further eliminate the hydrogen bonding between the long chains of the polymer by partially salifying the carboxylic acid functional groups on the long chain of polyacrylic acid. This reduces the hydrogen bonding effect during use and avoids agglomeration of the polymer chains with each other, enabling the binder to be dispersed efficiently in the electrode plate material and improving the kinetic performance of the cell.

(2) The conventional polyacrylic acid polymers also have excellent bonding performance, but generally have the characteristics of brittle. Such materials often come into contact with particulate matter in the coating in the form of mesh surface contact. Due to the linear structure of the molecular chain, the electrode plates has insufficient flexibility, and after high-pressure cold compaction for achieving high density, the electrode plates has insufficient elongation, and stress is easily concentrated at the edge of the coating region, resulting in edge overpressure. The electrode plates in high compacted density are prone to brittle fracture during subsequent processing. The foregoing modified polyacrylic acid polymer material of this application can enhance the flexibility of the electrode plate due to the addition of specific branched chains in the linear structure of the molecular chain, and after high-pressure cold compaction for achieving high density, the electrode plate has improved elongation, avoiding edge overpressure and alleviating the problem of the electrode plate in high compacted density being prone to brittle fracture during subsequent processing.

(3) When used as a binder in the preparation of negative electrode plates for lithium-ion batteries, the foregoing modified polyacrylic acid polymer material can also improve the dispersion of the slurry, extend the window for cold pressing after the electrode plates are dried, improve the processing performance, and during cycling, suppress the rebound of the anode electrode plate, reduce the growth of cell swelling force, and improve cycling performance.

Specifically, the value of m includes but is not limited to 2,500, 3,500, 4,500, 5,500, 6,500, 7,500, 8,500, 9,000, 9,500, 10,500, 11,000, 11,500, 12,500, 13,500, 15,500, 17,500, 18,500, 19,500, and 20,000. In one of the examples, m=7,500-12,500.

Specifically, the value of p includes but is not limited to 50, 55, 60, 80, 100, 115, 125, 135, 140, 145, 150, 155, 160, 165, 175, 185, 195, and 200. In one of the examples, p=125-175.

Specifically, the value of q includes but is not limited to 1,000, 1,500, 2,000, 4,000, 6,000, 8,000, 8,500, 9,000, 9,500, 10,000, 10,500, 11,000, 11,500, 12,000, 13,000, 14,000, 14,500, and 15,000. In one of the examples, q=8,000-12,000.

Specifically, the value of l includes but is not limited to 1,000, 1,500, 2,000, 4,000, 6,000, 8,000, 8,500, 9,000, 9,500, 10,000, 10,500, 11,000, 11,500, 12,000, 13,000, 14,000, 14,500, and 15,000. In one of the examples, l=8,000-12,000.

Specifically, the value of n includes but is not limited to 500, 600, 800, 1,000, 1,500, 2,000, 2,200, 2,300, 2,400, 2,500, 2,600, 2,700, 3,000, 4,000, 4,500, 4,800, and 5,000. In one of the examples, n=2,200-2,700.

In one of the examples, M is selected from one or more of sodium ion, lithium ion, potassium ion, or magnesium ion. It can be understood that M may be a monovalent ion or a divalent ion, and when M is a divalent ion, 1 mole of M may bind 2 moles of the monomers

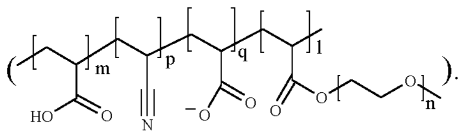

Further, M is selected from sodium ion.

A further example of this application provides a preparation method of modified polyacrylic acid polymer material, including the following step:

carrying out a polymerization reaction of an alkaline metal salt of acrylic acid, a polyethylene glycol acrylate monoester, an acrylic acid, and acrylonitrile.

In one of the examples, the polymerization reaction is carried out in the presence of a polymerization promoter and/or an initiator. Further, the polymerization reaction is carried out in the presence of a polymerization promoter and an initiator.

In one of the examples, the polymerization promoter includes sodium dodecyl sulfonate.

In one of the examples, based on a total mass of the alkaline metal salt of acrylic acid, polyethylene glycol acrylate monoester, acrylic acid, and acrylonitrile, an amount of the polymerization promoter added is 2-5%. Specifically, the amount of the polymerization promoter added includes but is not limited to 2%, 2.5%, 3%, 3.5%, 4%, 4.5%, and 5%. Further, the amount of the polymerization promoter added is 3-4.5%.

In one of the examples, the initiator includes one or more of potassium sulfate, potassium persulfate, sodium persulfate, and ammonium persulfate.

In one of the examples, based on the total mass of the alkaline metal salt of acrylic acid, polyethylene glycol acrylate monoester, acrylic acid, and acrylonitrile, an amount of the initiator added is 1-3%. Specifically, the amount of the initiator added includes but is not limited to 1%, 1.5%, 2%, 2.5%, and 3%. Further, the amount of the initiator added is 1-1.5%.

In one of the examples, the polymerization reaction is carried out at a temperature of 65-75°C for a time of 2-3 h.

In one of the examples, the steps for preparing the alkaline metal salt of acrylic acid include:

mixing an acrylic acid, an alkaline metal hydroxide, and a first solvent; carrying out a first reaction until pH of a resulting reaction solution is neutral; and carrying out distillation and drying to produce an alkaline metal salt of acrylic acid, where the alkaline metal in the alkaline metal hydroxide is selected from one or more of sodium, lithium, potassium, or magnesium.

In one of the examples, the alkaline metal hydroxide is sodium hydroxide.

In one of the examples, the first solvent includes water.

In one of the examples, the first reaction is carried out at room temperature.

In one of the examples, the steps for preparing the polyethylene glycol acrylate monoester includes:

mixing a polyethylene glycol, an acrylic acid, and a second solvent; and carrying out a second reaction to produce the polyethylene glycol acrylate monoester.

In one of the examples, the second reaction is carried out in the presence of a catalyst and a polymerization inhibitor.

In one of the examples, the catalyst includes one or more of p-toluenesulfonic acid, sulfuric acid, or aluminum trichloride.

In one of the examples, based on a total mass of the polyethylene glycol and acrylic acid, an amount of the catalyst added is 3-10%. Specifically, the amount of the catalyst added includes but is not limited to 3%, 4%, 4.5%, 5%, 5.5%, 6%, 7%, 8%, 9%, and 10%. Further, the amount of the catalyst added is 5-9%.

In one of the examples, the polymerization inhibitor includes one or more of hydroquinone, p-hydroxyanisole, and 2,6-di-tert-butyl-p-cresol.

In one of the examples, based on the total mass of the polyethylene glycol and acrylic acid, an amount of the polymerization inhibitor added is 1-5%. Specifically, the amount of the polymerization inhibitor added includes but is not limited to 1%, 1.5%, 2%, 2.5%, 3%, 3.5%, 4%, 4.5%, and 5%. Further, the amount of the polymerization inhibitor added is 3-4.5%.

In one of the examples, a molar ratio of the polyethylene glycol to the acrylic acid is 1:(0.8-1.2).

In one of the examples, the second reaction is carried out at a temperature of 65-75°C for a time of 20 minutes to 3 hours.

In one of the examples, the second solvent includes water.

In one of the examples, the polyethylene glycol has a degree of polymerization n=500-5,000. Specifically, the value of n includes but is not limited to 500, 600, 800, 1,000, 1,500, 2,000, 2,200, 2,300, 2,400, 2,500, 2,600, 2,700, 3,000, 4,000, 4,500, 4,800, and 5,000. In one of the examples, n=2,200-2,700.

In one of the examples, a molar ratio of the acrylic acid, acrylonitrile, alkaline metal salt of acrylic acid, and polyethylene glycol acrylate monoester is (2,500-20,000):(50-200):(1,000-15,000):(1,000-15,000). Specifically, the molar

ratio of the acrylic acid, acrylonitrile, alkaline metal salt of acrylic acid, and polyethylene glycol acrylate monoester includes but is not limited to 10,000:150:10,000:10,000, 2,500:150:10,000:10,000, 20,000:150:10,000:10,000, 10,000:50:10,000:10,000, 10,000:200:10,000:10,000, 10,000:150:1,000:10,000, 10,000:150:15,000:10,000, 10,000:150:1,000:10,000, 10,000:150:15,000:10,000, 10,000:150:10,000:1,000, and 10,000:150:10,000:15,000. In one of the examples, the molar ratio of the acrylic acid, acrylonitrile, alkaline metal salt of acrylic acid, and polyethylene glycol acrylate monoester is (7,500-12,500):(125-175):(8,000-12,000):(8,000-12,000). Further, the molar ratio of the acrylic acid, acrylonitrile, alkaline metal salt of acrylic acid, and polyethylene glycol acrylate monoester is (9,500-10,500):(140-160):(9,500-10,500):(9,500-10,500).

A further example of this application further provides a binder including one or more of the foregoing modified polyacrylic acid polymer material and a modified polyacrylic acid polymer material prepared by the foregoing preparation method.

A further example of this application further provides an electrode plate including a current collector and an active material layer disposed on at least one surface of the current collector, where a material of the active material layer includes an active material and the foregoing binder.

A further example of this application further provides a secondary battery including the foregoing electrode plate.

A further example of this application further provides an electric apparatus including at least one selected from the foregoing secondary batteries.

The following describes a secondary battery, a battery module, a battery pack, and an electric apparatus in this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

Positive electrode plate

The positive electrode plate includes a positive electrode current collector and a positive electrode film layer disposed on at least one surface of the positive electrode current collector, where the positive electrode film layer includes the positive electrode active material according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by depositing a metal material on a polymer material matrix. The metal material includes but is not limited to aluminum, aluminum alloy, nickel, nickel alloy, titanium, titanium alloy, silver, and silver alloy. The polymer material matrix is a matrix such as polypropylene (PP), polyethylene terephthalate (PET), polybutylene terephthalate (PBT), polystyrene (PS), or polyethylene (PE).

In some embodiments, the positive electrode active material may include a positive electrode active material well-known in the art and used for batteries. For example, the positive electrode active material may include at least one of the following materials: olivine-structured lithium-containing phosphate, lithium transition metal oxide, or respective modified compounds thereof. However, this application is not limited to such materials, and may alternatively use other conventional well-known materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), or modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, or composite materials of lithium manganese iron phosphate and carbon. The weight percentage of

the positive electrode active material in the positive electrode film layer is 80-100% by weight based on a total weight of the positive electrode film layer.

In some embodiments, the positive electrode film layer further needs to include a binder. The binder in this application may be used alone or in combination with another binder. The percentage of the binder in this application, when used alone, may be 0.5-1.5% by weight based on the total weight of the positive electrode film layer. When the binder in this application is used in combination with another binder, the another binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin, the percentage of all binders is 0.5-1.5% by weight, and the percentage of the another binder in a mixed binder is 10-50% by weight.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, or carbon nanofiber. The weight percentage of the conductive agent in the positive electrode film layer is 0-10% by weight based on the total weight of the positive electrode film layer.

In some embodiments, the positive electrode plate may be prepared in the following manner: The constituents used for preparing the positive electrode plate, for example, the positive electrode active material, the conductive agent, the binder, and any other constituents, are dispersed in a solvent (for example, N-methylpyrrolidone) to form a positive electrode slurry, where the positive electrode slurry has a solid content of 40-80% by weight, and the viscosity at room temperature is adjusted to 5,000-25,000 mPa·s; and the positive electrode slurry is applied on surface of a positive electrode current collector and dried, and then the positive electrode current collector is cold pressed by a cold rolling mill so as to form the positive electrode plate, where the areal surface density of the positive electrode powder applied is 120-210 $g/m^2$, and the compacted density of the positive electrode plate is 3.0-3.8 $g/cm^3$, optionally 3.3-3.7 $g/cm^3$. A formula for calculating the compacted density is

compacted density=coating surface density/(thickness of electrode plate after rolling - thickness of current collector).

## Negative electrode plate

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by depositing a metal material on a polymer material matrix. The metal material includes but is not limited to copper, copper alloys, nickel, nickel alloys, titanium, titanium alloys, silver, and silver alloys, and the polymer material matrix includes but is not limited to a matrix such as polypropylene (PP), polyethylene terephthalate (PET), polybutylene terephthalate (PBT), polystyrene (PS), and polyethylene (PE).

In some embodiments, the negative electrode active material may be a negative electrode active material well-known in the art and used for batteries. In an example, the negative electrode active material may include at least one of the following materials: artificial graphite, natural graphite, soft carbon, hard carbon, silicon-based materials, tin-based materials, lithium titanate, or the like. The silicon-based material may be selected from at least one of elemental silicon, silicon-oxygen compounds, silicon-carbon composites, silicon-nitrogen composites, or silicon alloys. The tin-based material may be selected from at least one of elemental tin, tin-oxygen compounds, or tin alloys. However, this application is not limited to these materials, but may use other conventional materials that can be used as negative electrode active materials for batteries instead. One of these negative electrode active materials may be used alone, or two or more of them may be used in combination. The weight percentage of the negative electrode active material in the negative electrode film layer is 70-100% by weight based on a total weight of the negative electrode film layer.

In some embodiments, the negative electrode film layer further needs to include a binder. The binder in this application may be used alone or in combination with another binder. The percentage of the binder in this application, when used alone, may be 1-2% by weight based on the total weight of the negative electrode film layer. When the binder in this application is used in combination with another binder, the another binder may include at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS), the percentage of all binders is 1-2% by weight, and the percentage of the another binder in a mixed binder is 10-50% by weight.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, or carbon nanofiber. The weight percentage of the conductive agent in the negative electrode film layer is 0-2% by weight based on the total weight of the negative electrode film layer.
In some embodiments, the negative electrode film layer may further optionally include another promoter such as a thickener (for example, sodium carboxymethyl cellulose (CMC-Na)). The weight percentage of the another promoter in the negative electrode film layer is 0-3% by weight based on the total weight of the negative electrode film layer.
In some embodiments, the negative electrode plate may be prepared in the following manner: The constituents used for preparing the negative electrode plate, for example, the negative electrode active material, the conductive agent, the binder, and any other constituents, are dispersed in a solvent (for example, deionized water) to form a negative electrode slurry, where the negative electrode slurry has a solid content of 30-70% by weight, and the viscosity at room temperature is adjusted to 2,000-15,000 mPa·s; and the resulting negative electrode slurry is applied on surface of a negative electrode current collector, followed by a drying process and cold pressing such as rolling, to produce a negative electrode plate. The areal surface density of the negative electrode powder applied is 65-165 $g/m^2$, and the compacted density of the negative electrode plate is 1.2-2.0 $g/m^3$.

Electrolyte

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.
In some embodiments, the electrolyte is a liquid electrolyte. The liquid electrolyte includes an electrolytic salt and a solvent.
In some embodiments, the electrolytic salt may be one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl) imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP). A concentration of the electrolytic salt is typically 0.5-5 mol/L.
In some embodiments, the solvent may be one or more selected from a group consisting of fluoroethylene carbonate (FEC), ethylidene carbonate (EC), propylidene carbonate (PC), ethyl methyl carbonate (EMC), diethyl carbonate (DEC), dimethyl carbonate (DMC), dipropyl carbonate (DPC), methylene propyl carbonate (MPC), ethylpropyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfonane (SF), methyl sulfonyl methane (MSM), ethyl methanesulfonane (EMS), or ethylsulfonyl ethane (ESE).
In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature performance or low-temperature performance of the battery.

Separator

In some embodiments, the secondary battery further includes a separator. The separator is not limited to any particular type in this application, and may be any well-known porous separator with good chemical stability and mechanical stability.
In some embodiments, a material of the separator may be selected from at least one of glass fiber, non-woven fabric, polyethylene, polypropylene, or polyvinylidene fluoride. The separator may be a single-layer film or a multi-layer composite film, and is not particularly limited. When the separator is a multi-layer composite film, all layers may be made of same or different materials, which is not particularly limited.
In some embodiments, the thickness of the separator is 3-40 μm, optionally 5-15 μm.
In some embodiments, the positive electrode plate, the negative electrode plate, and the separator may be made into an electrode assembly through winding or stacking.
In some embodiments, the secondary battery may include an outer package. The outer package may be used for packaging the electrode assembly and the electrolyte.
In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene,

polybutylene terephthalate, and polybutylene succinate.

The secondary battery is not limited to any particular shape in this application and may be cylindrical, rectangular, or any other shape. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fixed using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

## Examples

To make the technical problems solved by this application, technical solutions, and beneficial effects clearer, this application is further described below in detail with reference to examples and the accompanying drawings. Apparently, the described examples are merely some but not all of the examples of this application. The following description of at least one exemplary example is merely illustrative and definitely is not construed as any limitation on this application or on use of this application. All other examples obtained by persons of ordinary skill in the art based on the examples of this application without creative efforts shall fall within the protection scope of this application.

Examples whose technical solutions or conditions are not specified are made in accordance with technical solutions or conditions described in literature in the field or made in accordance with product instructions. The reagents or instruments used are all conventional products that are commercially available if no manufacturer is indicated.

## I. Preparation examples

### Preparation of binder

Preparation example 1

(1) At room temperature, sodium hydroxide aqueous solution was slowly added dropwise to an acrylic acid aqueous solution, and a resulting solution was stirred during the dropwise addition until the resultingsolution reached a neutral pH value. The resulting solution was then distilled and dried to produce sodium acrylic acid particles.
(2) Polyethylene glycol and acrylic acid at a molar ratio of 2:1 were added to distilled water, where a total mass concentration of the two in the water was 20%. Then, based on a total mass of the polyethylene glycol and acrylic acid, 5% catalyst (p-toluenesulfonic acid) and 3% polymerization inhibitor (hydroquinone) were added and stirred well. Then a resulting solution was heated to 70°C, with a reaction time of 30 minutes, to obtain an aqueous solution of acrylic polyethylene glycol monoester.
(3) The product from (2) was purified as follows:
mixing the product from (2) with dichloromethane, washing with a sodium hydroxide aqueous solution having a mass concentration of 5%, performing liquid separation to remove the aqueous solution, then washing with a saturated sodium chloride solution, performing liquid separation to remove excess polyether substances, and finally performing distillation to remove the solvent, to produce a polyethylene glycol acrylate monomer.
(4) Materials were provided as follows: an acrylic acid, acrylonitrile, sodium acrylate particles, and polyethylene glycol acrylate monoester were mixed at a molar ratio of 1,000:150:10,000:10,000, and based on a total mass of the sodium acrylate particles, polyethylene glycol acrylate monoester, acrylic acid, and acrylonitrile, an amount of a polymerization promoter (sodium dodecyl sulfonate) added was 3%, and an amount of a polymerization initiator (potassium sulfate) added was 2%.
(5) A polymerization promoter (sodium dodecyl sulfonate), an acrylic acid, and the sodium acrylate particles from (1) were added to distilled water and stirred well, where a total mass concentration of the three in the water was 20%. A resulting solution was heated to 70°C, then added with a polymerization initiator (potassium sulfate), polyethylene glycol acrylate monoester, and acrylonitrile, synchronously heated to 70°C and stirred continuously for 2.5 h. The supernatant was removed by centrifugation, and a target product was obtained with its infrared spectrum as shown in FIG. 7.

The preparation methods of binders of Examples 2-11 and Comparative examples 1 and 2 were similar to that of the binder of Example 1, but the amounts and types of each monomer added were changed. For details of different product parameters, refer to Table 1.

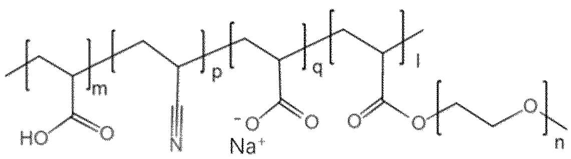

**Table 1**

| | m | p | q | l | n |
|---|---|---|---|---|---|
| **Preparation example 1** | **10,000** | **150** | **10,000** | **10,000** | **2,500** |
| Preparation example 2 | **2,500** | 150 | 10,000 | 10,000 | 2,500 |
| Preparation example 3 | **20,000** | 150 | 10,000 | 10,000 | 2,500 |
| Preparation example 4 | 10,000 | **50** | 10,000 | 10,000 | 2,500 |
| Preparation example 5 | 10,000 | **200** | 10,000 | 10,000 | 2,500 |
| Preparation example 6 | 10,000 | 150 | **1,000** | 10,000 | 2,500 |
| Preparation example 7 | 10,000 | 150 | **15,000** | 10,000 | 2,500 |
| Preparation example 8 | 10,000 | 150 | 10,000 | **1,000** | 2,500 |
| Preparation example 9 | 10,000 | 150 | 10,000 | **15,000** | 2,500 |
| Preparation example 10 | 10,000 | 150 | 10,000 | 10,000 | **500** |

(continued)

| | m | p | q | l | n |
|---|---|---|---|---|---|
| Preparation example 11 | 10,000 | 150 | 10,000 | 10,000 | **5,000** |
| Preparation comparative example 1 | 2,000 | 250 | 500 | 17,000 | 200 |
| Preparation comparative example 2 | Replacement of acrylic monomer with polyvinyl alcohol monomer 10,000 | 150 | 10,000 | 10,000 | 2,500 |

II. Application examples

Example 1

(1) Preparation of positive electrode plate

A positive electrode active material NCM, conductive agent acetylene black, and binder polyvinylidene fluoride (PVDF) at a weight ratio of 96.5:1.5:2 were dissolved in solvent N-methylpyrrolidone (NMP), stirred well and mixed to uniformity to produce a positive electrode slurry. Then the positive electrode slurry was uniformly applied onto a positive electrode current collector, followed by drying, cold pressing, and slitting to obtain a positive electrode plate.

(2) Preparation of negative electrode plate

Active material artificial graphite, silicon, conductive agent acetylene black, the foregoing binder, and thickener sodium carboxymethyl cellulose (CMC) at a weight ratio of 90:5:2:2:1 were dissolved in solvent deionized water, and mixed to uniformity with the solvent deionized water to prepare a negative electrode slurry. Then the slurry was applied onto a copper foil and dried, followed by cold pressing and slitting, to produce a negative electrode plate.

(3) Separator

A polypropylene separator with a thickness of 12 μm was used as a separator.

(4) Preparation of electrolyte

An organic solvent was a mixed solution of ethylene carbonate (EC), ethyl methyl carbonate (EMC), and diethyl carbonate (DEC), where a volume ratio of EC to EMC to DEC was 1:1:1. In an argon atmosphere glove box with water content less than 10 ppm, fully dried lithium salt $LiPF_6$ was dissolved in the organic solvent and mixed well to obtain an electrolyte. A concentration of the lithium salt was 1 mol/L.

(5) Preparation of battery

The positive electrode plate, the separator, and the negative electrode plate were stacked in sequence, so that the separator was placed between the positive and negative electrode plates for separation, and then the positive electrode plate, the separator, and the negative electrode plate were wound to form a prismatic bare cell. The bare cell was welded with tabs and packaged with an aluminum-plastic film, and then heated at 80°C for drying, and a corresponding non-aqueous electrolyte was injected at a liquid injection coefficient of 2.15 ml/Ah, followed by processes such as sealing, standing, hot/cold pressing, formation, shaping, and capacity testing, to produce a finished product of battery.

The preparation methods of secondary batteries of Examples 2-11 and Comparative examples 1 and 2 were similar to that of the secondary battery of Example 1, but the binders of the corresponding preparation examples were used.

**III. Battery performance test**

1. Test for adhesion

An electrode plate under test was taken, and a sample with proper length and width was cut out using a blade. A special double-sided adhesive tape was stuck to a steel plate, and the width of the tape must be fixed. The electrode plate sample cut out was stuck to the double-sided adhesive tape, with the to-be-test surface facing downward, and compacted

with a pressure roller. The force at which the peel strength was at largest value was tested with a tensile machine and converted to N/m according to the width of the tape.

2. Slurry stability

An appropriate amount of well-mixed slurry was taken with a beaker, encapsulated with plastic wrap, left standing for 24 h, and checked for slurry settlement/gelation as follows: opening the plastic wrap, gently moving a steel ruler across the surface of the slurry to check for any abnormalities on the surface of the slurry; and slowly extending the steel ruler vertically along the rim of the beaker to the bottom of the beaker, and scraping the slurry at the bottom and then pulling out the steel ruler to check the sedimentation brought up by the steel ruler.

3. Swelling force

After a cell was fixed by a fixture of a pressure sensor, a full DOD cycle test was carried out under the designed voltage window at a rate of 0.5C to monitor the change in swelling force during cycling. The ratio of an increment of the swelling force at which the capacity is decayed to 80% to the initial swelling force is the change in swelling force.

4. Toughness

An appropriate amount of cold-pressed electrode plate sample was taken, folded in half along the TD direction, placed on the plane of the experimental bench, rolled one time using a 2 kg cylinder roller, and then reversely folded one time in half to see whether there was transparency or fracture at the fold. Any transparency or fracture means NG, and if there was transparency or fracture, the foregoing test is repeated. The toughness was increased by 1 for each folding, and a maximum number of non-NG folds was recorded.

**III. Test Results of Examples and Comparative Examples**

Electrode plates and batteries in examples and comparative examples were prepared according to the foregoing methods, and performance parameters were measured. Results were shown in Table 2 below.

**Table 2**

| | Slurry stability | Adhesion | Toughness | Change in swelling force |
|---|---|---|---|---|
| Preparation example 1 | ok | 20.5 N/m | 4-fold, opaque | ↗405% |
| Preparation example 2 | ok | 7.3 N/m | 4-fold, opaque | ↗442% |
| Preparation example 3 | ok | 23.5 N/m | 2-fold, opaque | ↗375% |
| Preparation example 4 | ok | 10.2 N/m | 3-fold, opaque | ↗414% |
| Preparation example 5 | ok | 22.5 N/m | 2-fold, opaque | ↗383% |
| Preparation example 6 | Slight gel on surface | 21.8 N/m | 3-fold, opaque | ↗407% |
| Preparation example 7 | ok | 15.8 N/m | 3-fold, opaque | ↗427% |
| Preparation example 8 | ok | 20.3 N/m | 2-fold, opaque | ↗395% |
| Preparation example 9 | ok | 17.7 N/m | 5-fold, opaque | ↗489% |
| Preparation example 10 | ok | 19.9 N/m | 3-fold, opaque | ↗418% |
| Preparation example 11 | ok | 20.2 N/m | 4-fold, opaque | ↗567% |
| Preparation comparative example 1 | Moderately gelled slurry | 5.6 N/m | 6-fold, opaque | Low adhesion, unable to prepare cells due to delamination |
| Preparation comparative example 2 | ok | 7 N/m | 2-fold, opaque | ↗460% |

It can be seen that Examples 1-11 of this application all exhibit better slurry stability and adhesion along with a swelling force inhibition effect from comparisons with Comparative example 1, and exhibit better adhesion and toughness from comparisons with Comparative example 2. Overall, Examples 1-11 of this application show better comprehensive performance, and Example 1 is the best one of these examples.

In addition, it can be seen from comparisons between Example 1 and Examples 2 and 3 that the proportion of acrylic acid chain segments in the polymer has a certain influence on the adhesion, toughness, and swelling force inhibition effect. When the proportion is low, the adhesion and the swelling force inhibition effect decrease; and when the proportion is high, the adhesion and the swelling force inhibition effect increase to some extent, but the toughness decreases.

It can be seen from comparisons between Example 1 and Examples 4 and 5 that the proportion of acrylic cyanide chain segments in the polymer has a certain influence on the adhesion, toughness, and swelling force inhibition effect. When the proportion is low, the adhesion and the swelling force inhibition effect decrease; and when the proportion is high, the adhesion and the swelling force inhibition effect increase to some extent, but the toughness decreases.

It can be seen from comparisons between Example 1 and Examples 6 and 7 that the proportion of sodium acrylate chain segments in the polymer has a certain influence on the slurry stability, adhesion, toughness, and swelling force inhibition effect. When the proportion is low, the slurry stability decreases; when the proportion is high, the adhesion and the swelling force inhibition effect decrease; and no matter whether the proportion is low or high, the toughness decreases.

It can be seen from comparisons between Example 1 and Examples 8 and 9 that the proportion of polyethylene glycol acrylate monoester chain segments in the polymer has a certain influence on the adhesion, toughness, and swelling force inhibition effect. When the proportion is low, the swelling force inhibition effect increases to some extent, but the toughness decreases; and when the proportion is high, the toughness increases, but the adhesion and the swelling force inhibition effect decrease.

It can be seen from comparisons between Example 1 and Examples 10 and 11 that the polymer of polyethylene glycol in the polyethylene glycol acrylate monoester chain segment has a certain influence on the toughness and swelling force inhibition effect. No matter whether the proportion is low or high, the swelling force inhibition effect decreases; and when the proportion is low, the toughness also decreases.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A modified polyacrylic acid polymer material having the following structural features:

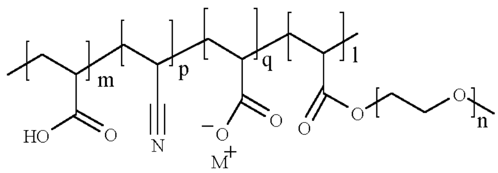

wherein m=2,500-20,000, p=50-200, q=1,000-15,000, and l=1,000-15,000; and n=500-5,000, and M is selected from alkaline metal ions.

2. The modified polyacrylic acid polymer material according to claim 1, **characterized in that** the modified polyacrylic acid polymer material has at least one of the following features:

(1)

$$m=7{,}500\text{–}12{,}500;$$

(2)

$$p=125\text{–}175;$$

(3)

$$q=8{,}000\text{–}12{,}000;\text{ or}$$

(4)

$$l=8,000-12,000.$$

3. The modified polyacrylic acid polymer material according to claim 1 or 2, **characterized in that** n=2,200-2,700.

4. The modified polyacrylic acid polymer material according to any one of claims 1 to 3, **characterized in that** M is selected from one or more of sodium ion, lithium ion, potassium ion, or magnesium ion.

5. A preparation method of modified polyacrylic acid polymer material, comprising the following step:
carrying out a polymerization reaction of an alkaline metal salt of acrylic acid, a polyethylene glycol acrylate monoester, an acrylic acid, and acrylonitrile.

6. The preparation method of modified polyacrylic acid polymer material according to claim 5, **characterized in that** the polymerization reaction is carried out in the presence of a polymerization promoter and/or an initiator;

   optionally, the polymerization promoter comprises sodium dodecyl sulfonate; further optionally, based on a total mass of the alkaline metal salt of acrylic acid, polyethylene glycol acrylate monoester, acrylic acid, and acrylonitrile, an amount of the polymerization promoter added is 2-5%; and furthermore optionally, an amount of the polymerization promoter added is 3-4.5%; and
   optionally, the initiator comprises one or more of potassium sulfate, potassium persulfate, sodium persulfate, and ammonium persulfate; further optionally, based on the total mass of the alkaline metal salt of acrylic acid, polyethylene glycol acrylate monoester, acrylic acid, and acrylonitrile, an amount of the initiator added is 1-3%; and furthermore optionally, the amount of the initiator added is 1-1.5%.

7. The preparation method of modified polyacrylic acid polymer material according to claim 5 or 6, **characterized in that** the polymerization reaction is carried out at a temperature of 65-75°C for a time of 2-3 h.

8. The preparation method of modified polyacrylic acid polymer material according to any one of claims 5 to 7, **characterized in that** the steps for preparing the alkaline metal salt of acrylic acid comprise:

   mixing an acrylic acid, an alkaline metal hydroxide, and a first solvent; carrying out a first reaction until pH of a resulting reaction solution is neutral; and carrying out distillation and drying to produce an alkaline metal salt of acrylic acid, wherein the alkaline metal in the alkaline metal hydroxide is selected from one or more of sodium, lithium, potassium, or magnesium;
   optionally, the first solvent comprises water; and
   optionally, the first reaction is carried out at room temperature.

9. The preparation method of modified polyacrylic acid polymer material according to any one of claims 5 to 8, **characterized in that** the steps for preparing the polyethylene glycol acrylate monoester comprise:
mixing a polyethylene glycol, an acrylic acid, and a second solvent; and carrying out a second reaction to produce the polyethylene glycol acrylate monoester.

10. The preparation method of modified polyacrylic acid polymer material according to claim 9, **characterized in that** the second reaction is carried out in the presence of a catalyst and a polymerization inhibitor;

   optionally, the catalyst comprises one or more of p-toluenesulfonic acid, sulfuric acid, and aluminum trichloride; further optionally, based on a total mass of the polyethylene glycol and acrylic acid, an amount of the catalyst added is 3-10%; furthermore optionally, the amount of the catalyst added is 5-9%; and
   optionally, the polymerization inhibitor comprises one or more of hydroquinone, p-hydroxyanisole, and 2,6-di-tert-butyl-p-cresol; further optionally, based on the total mass of the polyethylene glycol and acrylic acid, an amount of the polymerization inhibitor added is 1-5%; and furthermore optionally, the amount of the polymerization inhibitor added is 3-4.5%.

11. The preparation method of modified polyacrylic acid polymer material according to claim 9 or 10, **characterized in that** the second reaction has at least one of the following features:

(1) a molar ratio of the polyethylene glycol to the acrylic acid is 1:(0.8-1.2);
(2) the second reaction is carried out at a temperature of 65-75°C for a time of 20 minutes to 3 hours; or
(3) the second solvent comprises water.

**12.** The preparation method of modified polyacrylic acid polymer material according to any one of claims 9 to 11, **characterized in that** the polyethylene glycol has a degree of polymerization n=500-5,000; and optionally, n=2,200-2,700.

**13.** The preparation method of modified polyacrylic acid polymer material according to any one of claims 5 to 12, **characterized in that** a molar ratio of the acrylic acid, acrylonitrile, alkaline metal salt of acrylic acid, and polyethylene glycol acrylate monoester is (2,500-20,000):(50-200):(1,000-15,000):(1,000-15,000); and optionally, the molar ratio of the acrylic acid, acrylonitrile, alkaline metal salt of acrylic acid, and polyethylene glycol acrylate monoester is (7,500-12,500):(125-175):(8,000-12,000):(8,000-12,000).

**14.** A binder, **characterized by** comprising one or more of the modified polyacrylic acid polymer material according to any one of claims 1 to 4 and a modified polyacrylic acid polymer material prepared using the preparation method according to any one of claims 5 to 13.

**15.** An electrode plate, **characterized by** comprising a current collector and an active material layer disposed on at least one surface of a current collector, wherein a material of the active material layer comprises an active material and the binder according to claim 14.

**16.** A secondary battery, **characterized by** comprising the electrode plate according to claim 15.

**17.** An electric apparatus, **characterized by** comprising at least one selected from the secondary batteries according to claim 16.

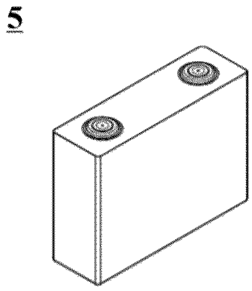


FIG. 1

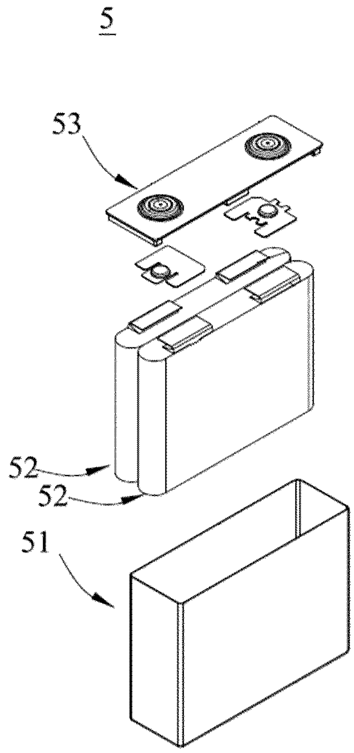


FIG. 2

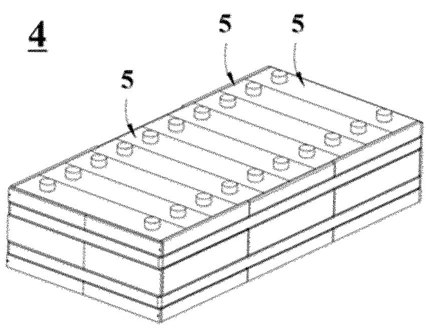


FIG. 3

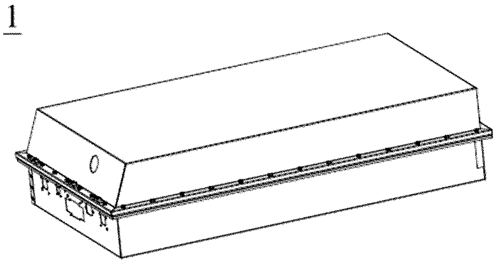


FIG. 4

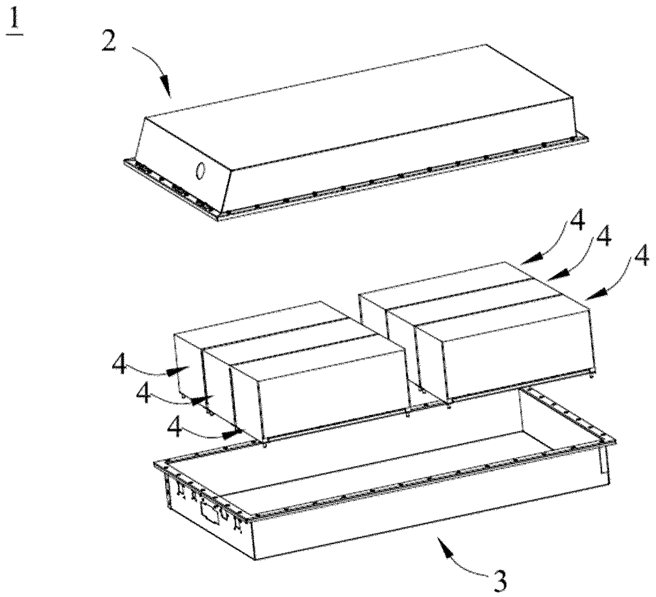


FIG. 5

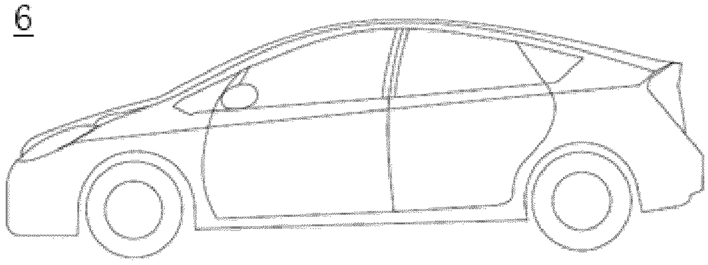


FIG. 6

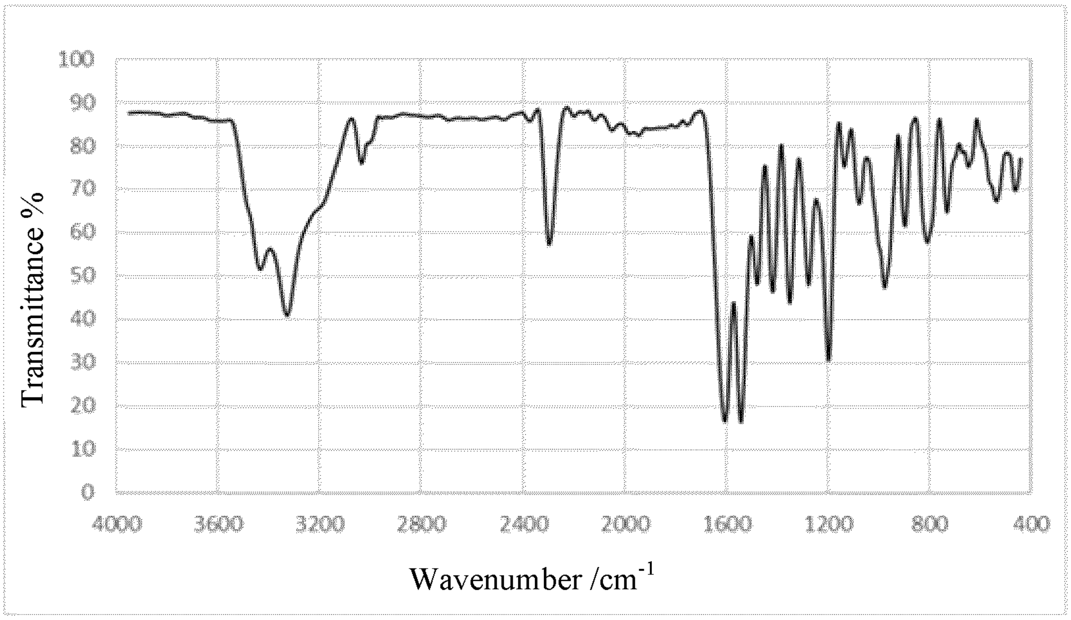
Transmittance %
100
90
80
70
60
50
40
30
20
10
0
4000
3600
3200
2800
2400
2000
1600
1200
800
400
Wavenumber /cm-1

FIG. 7

**INTERNATIONAL SEARCH REPORT**

International application No.
**PCT/CN2022/134632**

**A. CLASSIFICATION OF SUBJECT MATTER**

H01M4/62(2006.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 丙烯酸钠, 丙烯酸盐, 聚乙二醇, 丙烯酸, 酯, 丙烯腈, 丙烯氰, 粘结, 黏结, 粘接, 黏接, 韧性, 柔性, sodium, acrylate, acrylates, polyethylene, glycol, acrylic, ester, acrylonitrile, cyanogen, binder, flexible

**C. DOCUMENTS CONSIDERED TO BE RELEVANT**

| Category* | Citation of document, with indication, where appropriate, of the relevant passages | Relevant to claim No. |
|---|---|---|
| Y | CN 113690443 A (NINGDE CONTEMPORARY AMPEREX TECHNOLOGY CO., LTD.) 23 November 2021 (2021-11-23)<br>description, paragraphs 44-141 | 1-17 |
| Y | CN 111082062 A (XUANCHENG YANYI NEW ENERGY TECHNOLOGY CO., LTD.) 28 April 2020 (2020-04-28)<br>description, paragraphs 23-70 | 1-17 |
| A | CN 103579579 A (WANGXIANG EV CO., LTD. et al.) 12 February 2014 (2014-02-12)<br>entire document | 1-17 |
| A | JP 2013004229 A (MITSUBISHI RAYON CO., LTD.) 07 January 2013 (2013-01-07)<br>entire document | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2023** | **21 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/134632**

| Patent document cited in search report | | | Publication date (day/month/year) | Patent family member(s) | | | Publication date (day/month/year) |
|---|---|---|---|---|---|---|---|
| CN | 113690443 | A | 23 November 2021 | CN | 113690443 | B | 08 July 2022 |
| CN | 111082062 | A | 28 April 2020 | None | | | |
| CN | 103579579 | A | 12 February 2014 | CN | 103579579 | B | 21 December 2016 |
| JP | 2013004229 | A | 07 January 2013 | None | | | |

Form PCT/ISA/210 (patent family annex) (July 2022)